# EUROPÄISCHE PATENTANMELDUNG

(11) **EP 3 486 543 A1**
(43) Veröffentlichungstag der Anmeldung: **22.05.2019**
(21) Anmeldenummer: 18206683.7
(22) Anmeldetag: 16.11.2018
(51) Int. Cl.: F16L 33/30

(54) **VERFAHREN ZUR ABDICHTUNG EINER AUF BIEGUNG BEANSPRUCHTEN SCHLAUCHVERBINDUNG**

(30) Priorität: 20.11.2017 DE 102017127252
(71) Anmelder: REHAU AG + Co, 95111 Rehau (DE)
(72) Erfinder: Betz, Willi-Heinz, 95131 Schwarzenbach am Wald (DE); Pohland, Gerald, 08529 Plauen (DE); Reihl, Mathias, 95632 Wunsiedel (DE)

(57) **Zusammenfassung**

Die Erfindung betrifft ein Verfahren zur Abdichtung einer auf Biegung beanspruchten Schlauchverbindung (1), bei der auf einen Schlauchanschlussstutzen (2), der mindestens einen außenseitigen eine Dichtwirkung erzielenden umlaufenden Dichtvorsprung (6) aufweist, ein Endabschnitt (4) einer flexiblen, vorzugsweise polymeren Schlauchleitung (5) bis über den Dichtvorsprung (6) hinaus aufgeschoben wird. Der Schlauchleitungsendabschnitt (4) wird einer Biegebeanspruchung ausgesetzt, die sich in einem lokalen Biegeradius (R) der Schlauchleitung (5) am freien Schlauchanschlussstutzenende (8) von höchstens 50 cm, vorzugsweise höchstens 20 cm, äußert. Erfindungsgemäß werden mittels einer endseitig am Schlauchanschlussstutzen (2) vorgesehenen Beruhigungszone (11) Biegekräfte (B) im Schlauchleitungsendabschnitt (4) in dieser Beruhigungszone (11) abgebaut, um die Biegekräfte (B) am Dichtvorsprung (6) zu reduzieren und damit die Dichtigkeit der Schlauchverbindung (1) im Bereich des Dichtvorsprungs (6) zu erhöhen. Die axiale Länge (L) der Beruhigungszone (11) ist mindestens so groß wie deren Außendurchmesser (D).

## Beschreibung

Die Erfindung betrifft ein Verfahren zur Abdichtung einer auf Biegung beanspruchten Schlauchverbindung,
- bei der auf einen Schlauchanschlussstutzen, der mindestens einen außenseitigen eine Dichtwirkung erzielenden umlaufenden Dichtvorsprung aufweist, ein Endabschnitt einer flexiblen, vorzugsweise polymeren Schlauchleitung zumindest bis über den Dichtvorsprung, vorzugsweise über den Dichtvorsprung hinaus, aufgeschoben wird,
- wobei der Schlauchleitungsendabschnitt einer Biegebeanspruchung ausgesetzt wird, die sich in einem lokalen Biegeradius der Schlauchleitung am freien Schlauchanschlussstutzenende von höchstens 50 cm, vorzugsweise höchstens 20 cm äußert.

Bei verschiedensten Anwendungen, beispielsweise im Automobilbau, müssen flexible Schlauchleitungen an Schlauchanschlussstutzen angeschlossen und hierbei aus Platzgründen mit vergleichsweise engen Radien verlegt werden. Dies ist aufgrund der Flexibilität der Schlauchleitung grundsätzlich kein Problem, kann aber im Bereich des Schlauchanschlussstutzens, auf den die flexible Schlauchleitung endseitig aufgeschoben wird, zu Abdichtungsproblemen führen. Der umlaufende Dichtvorsprung ist bei solchen Anwendungen häufig konisch ausgebildet, so dass bei einer axialen Aneinanderreihung mehrerer Dichtvorsprünge eine tannenbaumähnliche Kontur entsteht, weshalb in diesem Zusammenhang der Schlauchanschlussstutzen auch "Tannenbaum" genannt wird.

Sofern nun die mit einem relativ engen Biegeradius verlegte flexible Schlauchleitung endseitig auf den Schlauchanschlussstutzen aufgeschoben wird, werden aufgrund der aus der Biegung resultierenden Rückstellkräfte des Schlauchleitungsmaterials auf das Ende des Schlauchanschlussstutzens vergleichsweise große Biegekräfte übertragen. Diese Biegekräfte können dazu führen, dass der lokale Anpressdruck zwischen Innenoberfläche der Schlauchleitung und äußerer Oberfläche des Anschlussstutzens - insbesondere am Außenradius der gekrümmten Schlauchleitung - reduziert werden und hierdurch eine Beeinträchtigung der entsprechenden Dichtigkeit der Schlauchverbindung entsteht. Insbesondere können im Bereich des Dichtvorsprungs die Abdichtungskräfte aufgrund reduzierter Oberflächenpressungen abfallen und daraus eine Leckage resultieren. Als Gegenmaßnahmen werden beispielsweise Schlauchschellen im Bereich des Dichtvorsprungs zusätzlich befestigt. Dabei entsteht jedoch ein Mehraufwand und außerdem wird das beschriebene Problem hierdurch nicht zufriedenstellend gelöst.

Vor diesem Hintergrund liegt der Erfindung die Aufgabe zugrunde, ein Verfahren mit den eingangs beschriebenen Merkmalen anzugeben, welches eine erhöhte Dichtigkeit der Schlauchverbindung gewährleistet und dabei gleichzeitig kostengünstig ist.

Erfindungsgemäß wird diese Aufgabe dadurch gelöst, dass mittels einer endseitig am Schlauchanschlussstutzen vorgesehenen Beruhigungszone, vorzugsweise in Form eines Kreiszylinders, Biegekräfte im Schlauchleitungsendabschnitt in dieser Beruhigungszone abgebaut werden, um die Biegekräfte am Dichtvorsprung zu reduzieren und damit die Dichtigkeit der Schlauchverbindung im Bereich des Dichtvorsprungs zu erhöhen, wobei die axiale Länge der Beruhigungszone mindestens so groß wie deren Außendurchmesser ist. Die erfindungsgemäße Lehre beruht auf der Erkenntnis, dass die eingangs beschriebenen Undichtigkeiten im Bereich des Dichtvorsprungs insbesondere dadurch hervorgerufen werden, dass der Dichtvorsprung relativ nahe am freien Ende des Schlauchanschlussstutzens angeordnet wird. Dies hat zur Folge, dass die beschriebenen hohen Biegekräfte aufgrund des Verlegens der Schlauchleitung mit geringem Biegeradius die Flächenpressungen am Dichtvorsprung sehr stark nachteilig beeinflussen. Durch die erfindungsgemäße Beruhigungszone wird nun sichergestellt, dass die genannten Biegekräfte innerhalb dieser Beruhigungszone beginnend vom freien Ende des Schlauchanschlussstutzens hin zum Dichtvorsprung weitgehend, vorzugsweise vollständig abgebaut werden, so dass im Bereich des Dichtvorsprungs die Biegemomentbeanspruchung aufgrund der gekrümmten Schlauchleitung nunmehr gering bzw. nicht mehr vorhanden ist.

Der Begriff "lokaler Biegeradius der Schlauchleitung am freien Schlauchanschlussstutzenende" meint im Rahmen der Erfindung insbesondere, dass in einem Schlauchleitungsabschnitt, welcher unmittelbar an das freie Ende des Schlauchanschlussstutzens angrenzt, an mindestens einer Stelle dieses Schlauchleitungsabschnitts ein erfindungsgemäß geringer Biegeradius auftritt. Dieser Schlauchleitungsabschnitt kann beispielsweise beginnend vom freien Ende des Schlauchanschlussstutzens von diesem Stutzen weg gesehen bis zu 5 cm lang sein, d.h. die erfindungsgemäße Lehre umfasst auch ein erfindungsgemäß geringen Biegeradius, welcher erst in einem gewissen Abstand (z.B. 3 oder 4 cm) vom freien Ende des Schlauchanschlussstutzens auftritt, während beispielsweise unmittelbar am freien Stutzenende die Schlauchleitung nur eine geringe bzw. gar keine Krümmung aufweist. Im Rahmen der Erfindung liegt es insbesondere aber auch, dass die Länge dieses Schlauchleitungsabschnitts maximal 3 cm, insbesondere maximal 2 cm, insbesondere max. 1 cm, z.B. max. 0,5 cm beträgt. Selbstverständlich kann sich der lokale Biegeradius entlang dieses Schlauchleitungsabschnitts verändern. Zweckmäßigerweise beträgt der lokale Biegeradius der Schlauchleitung am freien Schlauchanschlussstutzenende höchstens 10 cm, insbesondere höchstens 5 cm, z.B. höchstens 3 cm, beispielsweise höchstens 2 cm. Der Biegeradius wird an der Biegeinnenseite der Schlauchleitung gemessen. Im Rahmen der Erfindung liegt es insbesondere aber auch, dass der lokale Biegeradius mindestens 0,5 cm, z.B. mindestens 1 cm beträgt, um ein Knicken des Schlauches im Bereich des Schlauchabschnitts zu verhindern.

Erfindungsgemäß wurde ferner erkannt, dass die axiale Mindestlänge der Beruhigungszone von deren Außendurchmesser abhängig ist. Erfindungsgemäß ist die axiale Länge der Beruhigungszone mindestens so groß wie der Außendurchmesser des Schlauchanschlussstutzens in diesem Bereich. Im Rahmen der Erfindung liegt es dabei insbesondere, dass die axiale Länge der Beruhigungszone mindestens 1,5 mal so groß, vorzugsweise mindestens zweimal so groß wie deren Außendurchmesser ist. Der Außendurchmesser der Beruhigungszone kann mindestens 2 mm, vorzugsweise mindestens 3 mm betragen. Generell liegt es aber auch im Rahmen der Erfindung, dass die axiale Länge der Beruhigungszone mindestens 3 mm, vorzugsweise mindestens 4 mm, insbesondere mindestens 10 mm beträgt.

Das Material der Schlauchleitung besteht zweckmäßigerweise aus einem Kunststoff, beispielsweise EPDM, PVC, einem TPE oder auch einem Gummi. Die Wandstärke der Schlauchleitung beträgt zweckmäßigerweise 0,5 bis 3 mm, z.B. 1 bis 2 mm. Im Rahmen der Erfindung liegt es aber auch ganz allgemein, dass die Schlauchleitung eine Wandstärke von mindestens 0,5 mm, insbesondere mindestens 1 mm aufweist.

Grundsätzlich kann ein einziger umlaufender Dichtvorsprung am Schlauchanschlussstutzen ausreichend sein, um die gewünschte Dichtigkeit der Schlauchverbindung herzustellen. Im Rahmen der Erfindung liegt es insbesondere aber auch, dass am Schlauchanschlussstutzen mindestens zwei (z.B. drei), vorzugsweise axial voneinander beabstandete, umlaufende Dichtvorsprünge zur Abdichtung des Schlauchleitungsendabschnittes vorgesehen sind. Axial voneinander beabstandet meint, dass zwischen zwei Dichtvorsprüngen ein axialer Abstand in Form eines Freiraums ohne Dichtvorsprung vorliegt. Somit ergibt sich auch hier, wie eingangs erläutert, bei der Verwendung von mindestens zwei Dichtvorsprüngen bei entsprechender Kontur derselben eine tannenbaumförmige Gestalt des Schlauchanschlussstutzens. Zweckmäßigerweise beträgt der axiale Abstand der mindestens zwei Dichtvorsprünge zueinander mindestens 2 mm, vorzugsweise mindestens 3 mm.

Der mindestens eine Dichtvorsprung kann eine umlaufende, zur Beruhigungszone hin geneigte Schräge aufweisen, die mit der Schlauchanschlussstutzenachse einen Winkel von 10 bis 20° einschließt. Der mindestens eine Dichtvorsprung besitzt dann entsprechend eine kegelabschnittsförmige Kontur. Durch diese Gestalt des Dichtvorsprungs wird ein Aufschieben des Schlauchleitungsendes auf den Stutzen erleichtert, ein ungewolltes Abziehen hingegen erschwert.

Im Rahmen der Erfindung liegt es, dass der auf den Schlauchanschlussstutzen aufgeschobene Teil des Schlauchleitungsendabschnitts eine vollständig freie äußere Oberfläche aufweist. Damit ist insbesondere gemeint, dass die Oberfläche des Schlauchleitungsendabschnitts in diesem Bereich frei von Presshülsen, Schlauchschellen oder dergleichen ist. Durch die Anwendung der erfindungsgemäßen Lehre sind solche Vorrichtungen beim vorliegenden Einsatzfall nicht mehr erforderlich.

Der Schlauchanschlussstutzen selbst weist zweckmäßigerweise ein, vorzugsweise rotationssymmetrisches, Stutzenelement zum Anschluss des Endabschnitts der flexiblen Schlauchleitung auf, wobei an diesem Stutzenelement der mindestens eine Dichtvorsprung angeordnet ist, über den hinaus der Schlauchleitungsendabschnitt aufschiebbar ist. Ferner kann der Schlauchanschlussstutzen einen Stutzenschaft aufweisen, der einen Anschlag für den Schlauchleitungsendabschnitt bildet. Endsprechend ist der Stutzenschaft vom Dichtvorsprung axial beabstandet. Der Schlauchanschlussstutzen kann aus Metall, vorzugsweise Aluminium oder Messing, oder auch aus Kunststoff, vorzugsweise PP, PA, POM oder PC bestehen.

Wie bereits erwähnt, kommt das erfindungsgemäße Verfahren vorzugsweise bei Schlauchleitungen zum Transport von Fluiden, insbesondere Flüssigkeiten, in einem Kraftfahrzeug zum Einsatz. Hierbei kann es sich beispielsweise um den Transport von Scheibenwischwasser, Kühlwasser, Treibstoff oder einer SCR-Lösung zur katalytischen Abgasreinigung handeln.

Gegenstand der Erfindung ist ferner einen Schlauchanschlussstutzen zur Durchführung des vorbeschriebenen Verfahrens gemäß Anspruch 13 sowie eine Schlauchverbindung nach Anspruch 14.

Im Folgenden wird die Erfindung anhand einer lediglich ein Ausführungsbeispiel darstellenden Zeichnung ausführlich erläutert. Es zeigen schematisch:
- Fig. 1:: eine auf Biegung beanspruchte Schlauchverbindung gemäß dem Stand der Technik,
- Fig. 2:: ein erfindungsgemäßes Verfahren zur Abdichtung einer auf Biegung beanspruchten Schlauchverbindung und
- Fig. 3:: eine weitere Ausführungsform der Erfindung.

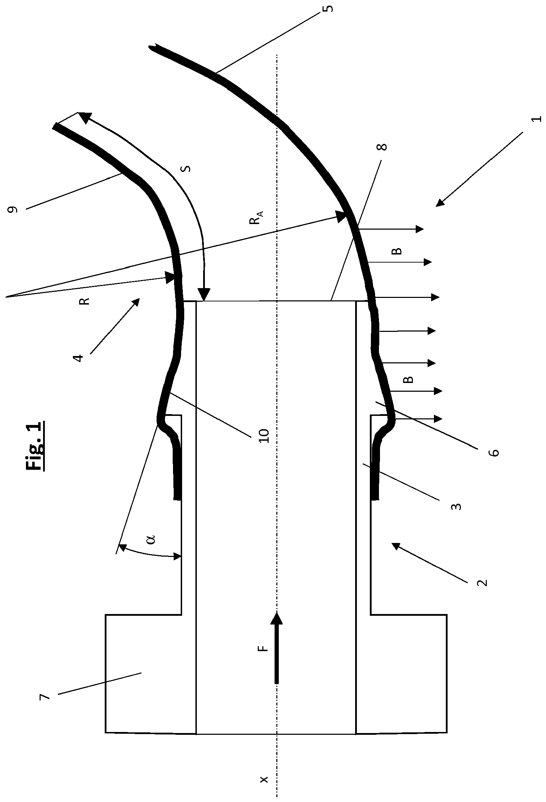

Fig. 1 zeigt ein Verfahren zur Abdichtung einer auf Biegung beanspruchten Schlauchverbindung 1 gemäß dem Stand der Technik. Bei dieser Schlauchverbindung 1 ist ein Schlauchanschlussstutzen 2 mit einem rotationssymmetrischen Stutzenelement 3 zum Anschluss eines Endabschnitts 4 einer flexiblen Schlauchleitung 5 vorgesehen, die aus einem polymeren Material besteht. Das Stutzenelement 3 weist einen außenseitigen, eine Dichtwirkung erzielenden umlaufenden Dichtvorsprung 6 auf, bis über den hinaus der Schlauchleitungsendabschnitt 4 axial aufgeschoben wird. Der Schlauchanschlussstutzen 2 besitzt ferner einen Stutzenschaft 7, der einen (im Ausführungsbeispiel nicht genutzten) axialen Anschlag für den Schlauchleitungsendabschnitt 4 bildet. Der Fig. 1 ist ferner zu entnehmen, dass der Schlauchleitungsendabschnitt 4 einer Biegebeanspruchung ausgesetzt wird, die sich einem lokalen Biegeradius R der Schlauchleitung 5 am freien Ende 8 des Schlauchanschlussstutzens 2 von höchstens 50 cm - im Ausführungsbeispiels R = 1 cm - äußert. Hierbei wird der Biegeradius R an der Biegeinnenseite der Schlauchleitung 5 gemessen. Der Begriff "lokaler Biegeradius R der Schlauchleitung 5 am freien Schlauchanschlussstutzenende 8 " meint hier, dass in einem Schlauchleitungsabschnitt 9, welcher unmittelbar an das freie Ende 8 des Schlauchanschlussstutzens 2, also des Stutzenelementes 3 angrenzt, an mindestens einer Stelle dieses Schlauchleitungsabschnitts 9 ein erfindungsgemäß geringer Biegeradius R auftritt. Die Länge S dieses frei beweglichen Schlauchleitungsabschnitts 9 kann beispielsweise beginnend vom freien Ende 8 des Schlauchanschlussstutzens 2 von diesem Stutzen 2 weg gesehen bis zu S = 5 cm betragen, d.h. die erfindungsgemäße Lehre umfasst auch ein erfindungsgemäß geringen Biegeradius R, welcher erst in einem gewissen Abstand (z.B. 3 cm) vom freien Ende 8 des Schlauchanschlussstutzens 2 auftritt. Im Ausführungsbeispiel liegt der geringe Biegeradius von R = 5 cm jedoch bereits im unmittelbar an das Stutzenende 8 angrenzenden, frei beweglichen Schlauchabschnitt 9 vor. Der Schlauchleitungsendabschnitt 4 umfasst folglich sowohl den Schlauchleitungsabschnitt 9 mit der Länge S als auch das Ende der Schlauchleitung 5, welches auf das Stutzenelement 3 aufgeschoben ist. Es ist ferner erkennbar, dass der Dichtvorsprung 6 eine umlaufende, zum freien Ende 8 des Stutzens 2 hin geneigte Schräge 10 aufweist, die mit der Rotationsachse x des Schlauchanschlussstutzens 2 einen Winkel von α = 15° einschließt. Im Beispiel gemäß Fig. 1 ist der Dichtvorsprung 6 relativ nahe am freien Ende 8 des Stutzenelementes 3 angeordnet. Dies hat zur Folge, dass sich die in der Schlauchleitung 4 aufgrund des engen Verlegeradius R auftretenden Biegekräfte B bis zum Dichtvorsprung 6 fortpflanzen. Hierdurch wird die Flächenpressung zwischen äußerer Oberfläche des Dichtvorsprungs 6 und daran anliegender innerer Oberfläche des Schlauchleitungsendabschnitts 4 insbesondere am Biegeau-Benradius R_{A} reduziert, was zu Leckagen führen kann. Die aus dem Biegeradius R der Schlauchleitung 4 resultierenden Biegekräfte B sind ausschnittsweise schematisch in Fig. 1 ebenfalls dargestellt.

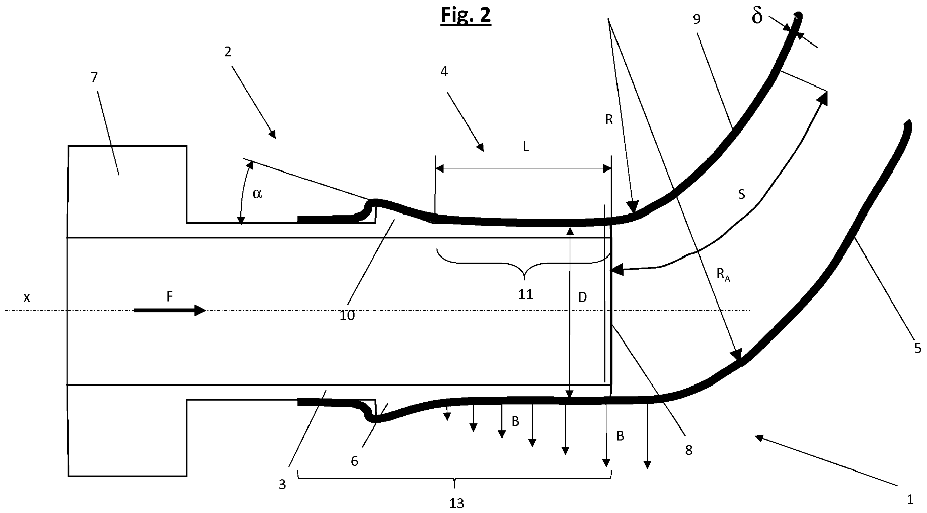

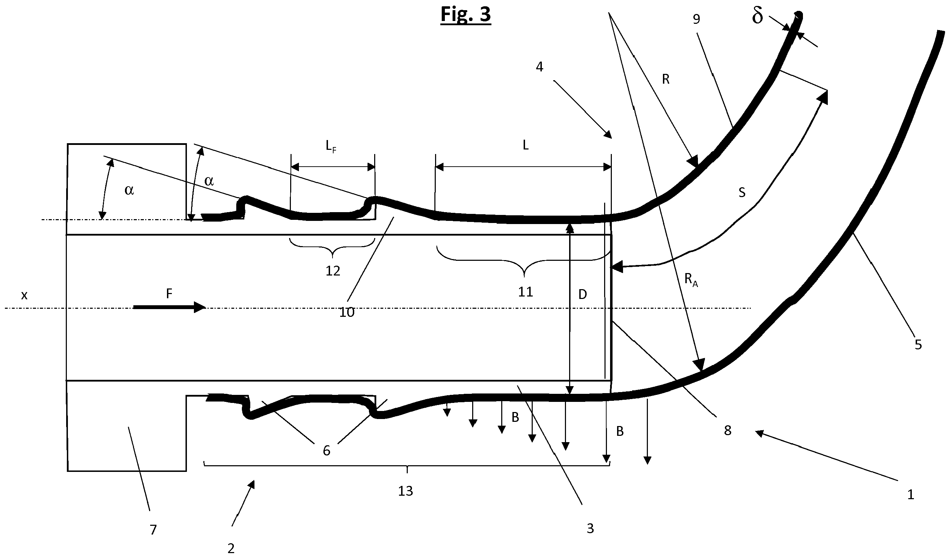

Beim Ausführungsbeispiel gemäß Fig. 2 ist hingegen das Stutzenelement 3 an seinem freien Ende 8 mit einer kreiszylindrischen Beruhigungszone 11 zum Abbau der Biegekräfte B in dem auf das Stutzenelement 3 aufgeschobenen Teil des Schlauchleitungsendabschnitts 9 versehen. Die axiale Länge L der Beruhigungszone 11 ist hierbei mindestens so groß wie deren Außendurchmesser D und kann beispielsweise mindestens 1,5 mal so groß, insbesondere mindestens zweimal so groß wie der Außendurchmesser D sein. Durch diese Maßnahme werden, wie in den Figuren 2 und 3 auch schematisch dargestellt, die durch den engen Verlegeradius R hervorgerufenen Biegekräfte B vom freien Ende 8 des Stutzenelements 3 entlang der Beruhigungszone 11 hin zum Dichtvorsprung 6 abgebaut, so dass der Dichtvorsprung 6 von den Biegekräften B im Wesentlichen bzw. gänzlich unbeeinflusst ist. Der Außendurchmesser D der Beruhigungszone beträgt im Ausführungsbeispiel 3 mm und die axiale Länge L der Beruhigungszone 4 mm. Die Schlauchleitung 5 weist im Ausführungsbeispiel eine Wandstärke von δ = 1 mm auf und besteht aus einem thermoplastischen Elastomer (TPE). Der einstückige Schlauchanschlussstutzen 2 ist aus dem Kunststoff Polyoxymethylen (POM) hergestellt.

Beim Ausführungsbeispiel in Fig. 3 sind am Stutzenelement 3 des Schlauchanschlussstutzens 2 zwei durch einen Freiraum 12 axial voneinander beabstandete, umlaufende Dichtvorsprünge 6 zur Abdichtung des Schlauchleitungsendabschnittes 9 vorgesehen. Die beiden Dichtvorsprünge 6 weisen einen die axiale Länge L_{F} des Freiraums 12 definierenden axialen Abstand von 2 mm auf. Auch die Dichtvorsprünge 6 in der Figur 3 weisen jeweils eine umlaufende, zur Beruhigungszone 11 hin geneigte Schräge 10 auf, die mit der Achse x des Schlauchanschlussstutzens 2 einen Winkel von α = 15° einschließt. Es ist ferner erkennbar, dass der auf das Stutzenelement 3 aufgeschobene Teil des Schlauchleitungsendabschnitts 4 eine vollständig freie äußere Oberfläche 13 aufweist, die also insbesondere frei von Presshülsen, Schlauchschellen oder dergleichen ist.

Die erfindungsgemäße Lehre findet insbesondere Anwendung im Bereich des Transportes einer Flüssigkeit F in einem Kraftfahrzeug, beispielsweise beim Transport von Wischwasser, von Kühlwasser, Treibstoff oder eine SCR-Lösung zur katalytischen Nachbehandlung von Verbrennungsabgasen, insbesondere in Dieselfahrzeugen.

## Patentansprüche

1. Verfahren zur Abdichtung einer auf Biegung beanspruchten Schlauchverbindung (1),
- bei der auf einen Schlauchanschlussstutzen (2), der mindestens einen außenseitigen eine Dichtwirkung erzielenden umlaufenden Dichtvorsprung (6) aufweist, ein Endabschnitt (4) einer flexiblen, vorzugsweise polymeren Schlauchleitung (5) zumindest bis über den Dichtvorsprung (6), vorzugsweise über den Dichtvorsprung (6) hinaus, aufgeschoben wird,
- wobei der Schlauchleitungsendabschnitt (4) einer Biegebeanspruchung ausgesetzt wird, die sich in einem lokalen Biegeradius (R) der Schlauchleitung (5) am freien Schlauchanschlussstutzenende (8) von höchstens 50 cm, vorzugsweise höchstens 20 cm, äußert,
**dadurch gekennzeichnet, dass** mittels einer endseitig am Schlauchanschlussstutzen (2) vorgesehenen Beruhigungszone (11), vorzugsweise in Form eines Kreiszylinders, Biegekräfte (B) im Schlauchleitungsendabschnitt (4) in dieser Beruhigungszone (11) abgebaut werden, um die Biegekräfte (B) am Dichtvorsprung (6) zu reduzieren und damit die Dichtigkeit der Schlauchverbindung (1) im Bereich des Dichtvorsprungs (6) zu erhöhen, wobei die axiale Länge (L) der Beruhigungszone (11) mindestens so groß wie deren Außendurchmesser (D) ist.

2. Verfahren nach Anspruch 1, **dadurch gekennzeichnet, dass** die axiale Länge (L) der Beruhigungszone (11) mindestens 1,5 mal so groß, vorzugsweise mindestens zweimal so groß wie deren Außendurchmesser (D) ist.

3. Verfahren nach Anspruch 1 oder 2, **dadurch gekennzeichnet, dass** der Außendurchmesser (D) der Beruhigungszone (11) mindestens 2 mm, vorzugsweise mindestens 3 mm beträgt.

4. Verfahren nach einem der Ansprüche 1 bis 3, **dadurch gekennzeichnet, dass** die axiale Länge (L) der Beruhigungszone (11) mindestens 3 mm, vorzugsweise mindestens 4 mm beträgt.

5. Verfahren nach einem der Ansprüche 1 bis 4, **dadurch gekennzeichnet, dass** eine Schlauchleitung (5) aus EPDM, PVC, einem TPE oder einem Gummi verwendet wird.

6. Verfahren nach einem der Ansprüche 1 bis 5, **dadurch gekennzeichnet, dass** die Schlauchleitung (5) eine Wandstärke (δ) von 0,5 bis 3 mm, vorzugsweise 1 bis 2 mm, aufweist.

7. Verfahren nach einem der Ansprüche 1 bis 6, **dadurch gekennzeichnet, dass** am Schlauchanschlussstutzen (2) mindestens zwei, vorzugsweise axial voneinander beabstandete, umlaufende Dichtvorsprünge (6) zur Abdichtung des Schlauchleitungsendabschnitts (4) vorgesehen sind.

8. Verfahren nach Anspruch 7, **dadurch gekennzeichnet, dass** die mindestens zwei Dichtvorsprünge (6) einen axialen Abstand (L_{F}) von mindestens 2 mm, vorzugsweise mindestens 3 mm, zueinander aufweisen.

9. Verfahren nach einem der Ansprüche 1 bis 8, **dadurch gekennzeichnet, dass** der mindestens eine Dichtvorsprung (6) eine umlaufende, zur Beruhigungszone (11) hin geneigte Schräge (10) aufweist, die mit der Schlauchanschlussstutzenachse (x) einen Winkel (α) von 10 bis 20 ° einschließt.

10. Verfahren nach einem der Ansprüche 1 bis 9, **dadurch gekennzeichnet, dass** der auf den Schlauchanschlussstutzen (2) aufgeschobene Teil des Schlauchleitungsendabschnittes (4) eine vollständig freie äußere Oberfläche (13) aufweist.

11. Verfahren nach einem der Ansprüche 1 bis 10, **dadurch gekennzeichnet, dass** der Schlauchanschlussstutzen (2) aus Metall, vorzugsweise Aluminium oder Messing, oder aus Kunststoff, vorzugsweise PP, PA, POM oder PC, besteht.

12. Verfahren nach einem der Ansprüche 1 bis 11, **dadurch gekennzeichnet, dass** die Schlauchleitung (5) zum Transport einer Flüssigkeit in einem Kraftfahrzeug, insbesondere von Wischwasser, Kühlwasser, Treibstoff oder einer SCR-Lösung, verwendet wird.

13. Schlauchanschlussstutzen (2) zur Durchführung des Verfahrens nach einem der Ansprüche 1 bis 12, mit
- einem, vorzugsweise rotationssymmetrischen, Stutzenelement (3) zum Anschluss eines Endabschnitts (4) einer flexiblen Schlauchleitung (5),
- wobei das Stutzenelement (3) mindestens einen außenseitigen, eine Dichtwirkung erzielenden umlaufenden Dichtvorsprung (6) aufweist, auf der Schlauchleitungsendabschnitt (4) aufschiebbar ist, und
- einem einen Anschlag für den Schlauchleitungsendabschnitt (4) bildenden Stutzenschaft (7),
**dadurch gekennzeichnet, dass** das Stutzenelement (3) an seinem freien Ende (8) eine, vorzugsweise kreiszylindrische, Beruhigungszone (11) zum Abbau von Biegekräften im Schlauchleitungsendabschnitt (4) aufweist und dass die axiale Länge (L) der Beruhigungszone (11) mindestens so groß wie deren Außendurchmesser (D) ist.

14. Schlauchverbindung (1) mit
- einem Schlauchanschlussstutzen (2) nach Anspruch 13 und
- einer flexiblen, vorzugsweise polymeren Schlauchleitung (5),
wobei ein Endabschnitt (4) der Schlauchleitung (5) zumindest bis über den Dichtvorsprung (6), vorzugsweise über den Dichtvorsprung (6) hinaus aufgeschoben ist, und wobei der Schlauchleitungsendabschnitt (4) einer Biegebeanspruchung ausgesetzt ist, die sich in einem lokalen Biegeradius (R) der Schlauchleitung (4) am freien Schlauchanschlussstutzenende (8) von höchstens 50 cm, vorzugsweise höchstens 20 cm, äußert.
